(19) Europäisches Patentamt
European Patent Office
Office européen des brevets

(11) **EP 4 154 972 B1**

(12) **EUROPEAN PATENT SPECIFICATION**

(45) Date of publication and mention
of the grant of the patent:
**20.11.2024 Bulletin 2024/47**

(21) Application number: **21198951.2**

(22) Date of filing: **24.09.2021**

(51) International Patent Classification (IPC):
*B01F 23/41* (2022.01)      *B01F 25/314* (2022.01)
*B01F 33/301* (2022.01)      *B01F 33/81* (2022.01)
*B01F 35/71* (2022.01)       *B01L 3/00* (2006.01)
*B01L 3/02* (2006.01)        *B33Y 80/00* (2015.01)

(52) Cooperative Patent Classification (CPC):
**B01F 23/41; B01F 25/314; B01F 33/301;
B01F 33/813; B01F 35/7182; B01L 3/502784;
B33Y 80/00;** B01L 2300/0864; B01L 2300/0874

(54) **MONODISPERSE MICRODROPLET PRODUCING DEVICE AND METHOD OF PRODUCING THE SAME**

VORRICHTUNG ZUR HERSTELLUNG MONODISPERSER MIKROTRÖPFCHEN UND VERFAHREN ZU DEREN HERSTELLUNG

DISPOSITIF DE PRODUCTION DE MICROGOUTTELETTES MONODISPERSÉES ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.03.2023 Bulletin 2023/13**

(73) Proprietor: **KIST-Europe Forschungsgesellschaft mbH**
**66123 Saarbrücken (DE)**

(72) Inventors:
• **O'Connor, Jonathan**
  **66123 Saarbrücken (DE)**
• **Manz, Andreas**
  **66133 Saarbrücken (DE)**
• **Sung, Baeckkyoung**
  **66111 Saarbrücken (DE)**

(74) Representative: **Schön, Christoph**
**Dr. Schön, Neymeyr & Partner mbB**
**Bavariaring 26**
**80336 München (DE)**

(56) References cited:
**WO-A1-02/092207**      **WO-A1-2018/191787**
**CN-A- 102 389 730**     **JP-A- 2011 206 678**
**US-A1- 2004 126 454**

**Description**

The present invention relates to a monodisperse microdroplet producing device which comprises a high number of outlet channels based on splitting a continuous phase inlet and a discontinuous phase inlet by using an intertwined 3-dimensional (3-D) channel structure providing a multiplexed monodisperse microdroplet generator offering the production of desired monodisperse microdroplet volumes.

Droplet generators belong to a field of microfluidics that has gathered particular interest for its biological assay and chemical particle production applications. Each droplet may act as an individualized compartment for cells and biomacromolecules which acts as a more in-vivo relevant matrix than traditional micro well assays. Recently, droplet generation has rapidly developed in order to meet the demand of production. Hence, out-scaling of production is required either via parallelization or serialization. These forming techniques suffer from 2-D fabrication limitations, resulting in poor multiplexing and scaling, often leading to major difficulties with chip-to-chip droplet size variation device handling difficulties and differences in droplet residence times. 3-D manufacturing provides an alternative method to fabricate microfluidic devices as it allows for the production of structures that are impossible to be produced with standard techniques, particularly with structures that vary in the third dimension.

US 10 792 638 B2 discloses a microfluidic system comprising a multilayer structure comprising one or more droplet generation layers, each comprising a plurality of microfluidic droplet generation devices, wherein each microfluidic droplet generation device comprises:

> a droplet generation zone;
> a dispersed-phase input channel coupled to the droplet generation zone at a first junction;
> an output channel coupled to the droplet generation zone at a second junction;
> a first and a second break channel intersecting the dispersed-phase input channel at the first junction;
> a first and a second bypass channel intersecting the output channel at the second junction;
> a first continuous-phase input channel coupled to the first bypass channel;
> a second continuous-phase input channel coupled to the second bypass channel;
> a first connecting channel connected with a first end to the droplet generation zone and with a second end to the first bypass channel; and
> a second connecting channel connected with a first end to the droplet generation zone and with a second end to the second bypass channel.

However, the microfluidic system disclosed in US 10 792 638 B2 suffers from the drawbacks that the droplet generation layers have to be sealed in a very tight manner and any leakage between the layers may result in a destruction of the system. Furthermore, the microfluidic system described in US 10 792 638 B2 cannot easily be scaled up and, therefore, a process for producing such a microfluidic system is limited and complicated.

Moreover, WO 02/092207 A1 discloses a microdroplet producing device with a similar structure as defined in claim 1. It discloses a structure for mixing at least two fluids, said structure comprising: at least two fluid transporting fractals, each said fractal having a respective fluid input which bifurcates to a plurality of fluid outputs, said fractals being positioned to be offset from one another, each fractal being configured to facilitate an independent flow therethrough, said fluid exits from the separate offset fractals being configured such that they are homogeneously interspersed with one another, and said fluid outlets being disposed such that fluid exiting said outlets flows across an area.

The technical problem the present invention solves, is to provide a monodisperse microdroplet producing device which overcomes the above-mentioned drawbacks.

According to the present invention there is provided a monodisperse microdroplet producing device comprising

- a device body,
- at least one continuous phase inlet and at least one discontinuous phase inlet present on a first surface;
- wherein the first surface is substantially parallel to a xy-plane formed by an x-axis and y-axis;
- a plurality of channels comprising at least one continuous phase channel and one discontinuous phase channel;
- wherein the channels extend in a z-direction, which is perpendicular to the xy-plane;
- wherein each continuous phase channel and each discontinuous phase channel of a generation (n) splits in at least one splitting section into a number of channels (S) per splitting section of a subsequent generation (n+1) so that the number of the continuous phase channels and of the discontinuous phase channels of each subsequent generation is increased by a factor $\geq 2$; and
- wherein each continuous phase channel and each discontinuous phase channel of each generation comprises at least one descending section in which the channels extend in the z-direction,
- at least one connection section in which at least one of the continuous phase channels intersects with at least one discontinuous phase channel to form a microdroplet generator, and
- wherein the continuous and discontinuous phase channels do not intersect in a prior generation to the generation of continuous and discontinuous phase channels forming the connection section,
- at least one outlet for the generated microdroplets, which is present on a second surface,

- wherein each outlet is connected to the continuous phase inlet and the discontinuous phase inlet via at least one continuous phase channel and one discontinuous phase channel,

wherein the first surface and the second surface are parallel to each other in the z-direction,
wherein the splitting section of the continuous phase channels and the splitting section of the discontinuous phase channels of the respective generation (n) have a different distance from the first surface on the z-axis, but the splitting sections of the respective generation (n) of continuous phase channels and discontinuous phase channels, which are connected in the generation forming the connection section, have the same location on the x- and y-axis,
and wherein in at least one plane parallel to the xy-plane parts of the descending section of the continuous phase channels of the generation (n) are surrounded by the descending sections of the generation (n+1) of the discontinuous phase channels, which are connected in the generation forming the connection section,
except for the generation of continuous phase channels and discontinuous phase channels forming the connection section.

In a preferred embodiment of the monodisperse microdroplet producing device the number of generations of continuous phase channels and discontinuous phase channels is at least 3, respectively.

In a further preferred embodiment of the monodisperse microdroplet producing device the number of the continuous phase channels and the number of the discontinuous phase channels of each generation is the same.

In a further preferred embodiment of the monodisperse microdroplet producing device in each channel splitting section each continuous phase channel and each discontinuous phase channel of the generation (n) splits into 3 to 5 continuous phase channels and discontinuous phase channels of the generation (n+1).

In a further preferred embodiment of the monodisperse microdroplet producing device in each channel splitting section each continuous phase channel and each discontinuous phase channel of the generation (n) splits into four continuous phase channels and four discontinuous phase channels of the generation (n+1) so that the channel ratio of the continuous phase channels and of the discontinuous phase channels of the generations n:n+1:n+2:n+3 amounts to 1:4:16:64.

Preferably the channel section of the continuous phase channels and of the discontinuous phase channels splits at each of the generations of continuous or discontinuous phase channels in an angle of 90° being parallel to xy-plane to form a transversal section of the subsequent-generation of continuous or discontinuous phase channels.

Preferably the angle β between each of the continuous and/or the discontinuous phase channels splitting in the splitting section, which angle is calculated in a plane parallel to the first surface, is the same for all branching channels of the same generation, irrespective of the number S thereof per splitting section and the angle β between each adjacent branching continuous/discontinuous flow channels can be calculated according to the formula:

$$\beta = 360° \ / \ S.$$

Preferably the splitting of the discontinuous phase channels occurs at an offset Δ with respect to splitting of the continuous phase channels of the same generation and the offset Δ can be calculated based on the respective angle β, which is the branching angle of the continuous/discontinuous phase channels of the same generation, using the formula

$$\Delta = \beta \ /2.$$

In another preferred embodiment of the monodisperse microdroplet producing device the cross-sectional diameter perpendicular to the flow direction of the continuous or discontinuous phase fluid of the generation of channels forming the connection section is in a range of from 0.01 mm to 10 mm, more preferred in a range of from 0.02 to 1 mm.

Preferably the sum of all cross-sectional areas of the continuous and/or discontinuous phase channels of a generation (n+1) of channels corresponds to the sum of all the cross-sectional areas of the channels in the previous generation (n) of channels, respectively.

In still another preferred embodiment of the monodisperse microdroplet producing device the device body is a square cuboid and the two surfaces which have the shape of a square are defined as the upper surface and the lower surface, respectively.

In still another preferred embodiment of the monodisperse microdroplet producing device wherein the outlets have a tapered shape.

The present invention further provides a method of producing a monodisperse microdroplet producing device as defined in claim 13.

The monodisperse microdroplet producing device according to the present invention is described in more detail by reference to the following Figures:

Figure 1 is a view showing (Figure 1A) the side (0°), (Figure 1B) top and (Figure 1C) bottom of one embodiment of a monodisperse microdroplet producing device 100 according to the present invention.

Figure 2 is a view showing (Figure 2A) the side (45°) of one embodiment of a monodisperse microdroplet producing device 100 according to the present invention, wherein the sliced view (Figure 2B) shows the internal splitting channel structure.

Figure 3 is a view showing the internal intertwined channel structure of one embodiment of a monodisperse microdroplet producing device 100 according to the present invention.

Figure 4 is a view showing the internal continuous phase channel structure of one embodiment of a monodisperse microdroplet producing device 100 according to the present invention.

Figure 5 is a view showing the internal discontinuous phase channel structure of one embodiment of a monodisperse microdroplet producing device 100 according to the present invention.

The monodisperse microdroplet producing device 100 according to the present invention is configured to produce a high number of monodisperse microdroplets suitable for a simultaneous application of said monodisperse microdroplets. The monodisperse microdroplet producing device 100 according to the present invention comprises at least one device body 110 which comprises a first surface 112 and a second surface 114. The first surface 112 and the second surface 114 of the device body 110 are located opposite to each other, wherein the shortest distance D1 between the two surfaces 112 and 114 is 1.0 mm or more.

The device body 110 may have different 3-dimensional (3-D) shapes and sizes so that any desired channel system as described in detail below, can be produced. The device body 110 may have the 3-D shape in the form of a cube, tetrahedron, square pyramid, cuboid cylinder, triangular prism, rectangular prism, pentagonal prism, hexagonal prism, cone or any other suitable 3-D shape.

In a preferred embodiment the 3-D shape of the device body 110 is a square cuboid. In case the device body 110 has a square cuboid shape, the two surfaces which have the shape of a square are defined as the upper surface and the lower surface, respectively. The residual faces form side surfaces S1 to S4.

The device body 110 may be produced by using any suitable material. Examples of suitable materials are (co)polymers, such as poly(methyl methacrylate) (PMMA), cyclic olefin copolymer (COC), cyclic olefin polymer (COP), poly-40 carbonate (PC), polyethylene terephthalate (PET), polydimethylsiloxane (PDMS), glass or silicone. In some embodiments the monodisperse microdroplet producing device 100 can be produced by using conventional 3-D printing techniques. Therefore, in one embodiment the microdroplet producing device body 110 can be produced by using a material suitable for 3-D printing.

The monodisperse microdroplet producing device 100 according to the present invention comprises at least one inlet 132 for introducing a continuous phase fluid (a continuous phase inlet 132) into which a continuous phase fluid is introduced. Preferably, the monodisperse microdroplet producing device 100 of the present invention comprises one continuous phase inlet 132.

Furthermore, the monodisperse microdroplet producing device 100 of the present invention comprises at least one inlet 134 for introducing a discontinuous phase fluid (a discontinuous phase inlet 134) into which a discontinuous phase fluid is introduced. Preferably, the monodisperse microdroplet producing device 100 of the present invention comprises one discontinuous phase inlet 134.

In droplet-based microfluids, the continuous phase refers to the continuous fluid that occupies most of the volume and the discontinuous phase is present in the form of droplets of the second liquid. Monodisperse microdroplets can be generated either by passive methods or active methods. Most techniques of producing microfluids are passive methods, and they produce droplets via specific flow fields to deform the interface and promote the natural growth of interfacial instabilities. Passive methods can be grouped into three categories which are characterized by the nature of the flow field used:

(1) breakup in co-flowing streams, the dispersed phase flows through a capillary tube positioned upstream near an exit orifice through which the continuous fluid is forced;

(2) breakup in cross-flowing streams or cross-junction geometry which comprises microchannels usually with same geometries and sizes that intersect at right angles; and

(3) breakup in a flow-focusing junction comprising a central channel and two outside channels, which are positioned upstream a small and short orifice, and then to a wide outlet collection.

All the above-mentioned passive methods can be used according to the present invention to accurately control the emulsion droplet dispersity and size in a controlled and reproducible manner. However, according to the present invention preferably (2) a breakup in cross-flowing streams or a cross-junction geometry is used.

According to the present invention the term "fluid" is not limited to substances which are liquid at room temperature (20 to 25°C), but also includes molten substances which form liquids at higher temperatures or gaseous substances.

Both, the continuous phase inlet(s) 132 and the discontinuous phase inlet(s) 134 are preferably designed in such a way that at least one supply tube/channel 140 can be attached to the continuous phase inlet 132 and at least one second supply tube/channel 150 can be at-

7     **EP 4 154 972 B1**     8

tached to the discontinuous phase inlet 134. The supply tubes/channels 140/150 can be formed of any suitable material used in the field of microdroplet generators.

The supply tubes/channels 140/150 can be connected to one or several pump systems to supply the continuous phase liquid and/or the discontinuous phase liquid via the supply tubes/channels 140/150 into the continuous phase inlet(s) 132 or discontinuous phase inlet(s) 134, respectively. Any pump or pump system common in the field of monodisperse microdroplet generation can be used.

The monodisperse microdroplet production device 100 of the present invention further comprises a plurality of channels 200, wherein the channels 200 connect the continuous phase inlet 132 and the discontinuous phase inlet 134 and at least one outlet 160 in a manner that the continuous phase fluid and the discontinuous phase fluid which are used, can pass through the channels 200. Furthermore, the connection sections 260 of the plurality of channels 200 is configured to form monodisperse microdroplet generators 300. The connection sections of the plurality of channels 200 are defined as the part of the channel system 200 at which the two fluids (continuous phase fluid and discontinuous phase fluid) which are injected in the continuous and discontinuous phase inlet 132, 134, respectively, mix for the first time. Such a configuration is already known from various microdroplet generators 300 used in the respective field of the art as outlined above.

As such, a monodisperse microdroplet generator 300 according to the present invention is configured in such a way that microdroplets are formed by introducing the discontinuous phase fluid into the continuous phase fluid at a connection section 260 of the channel system 200, whereupon the monodisperse microdroplets are transported to the outlets 160.

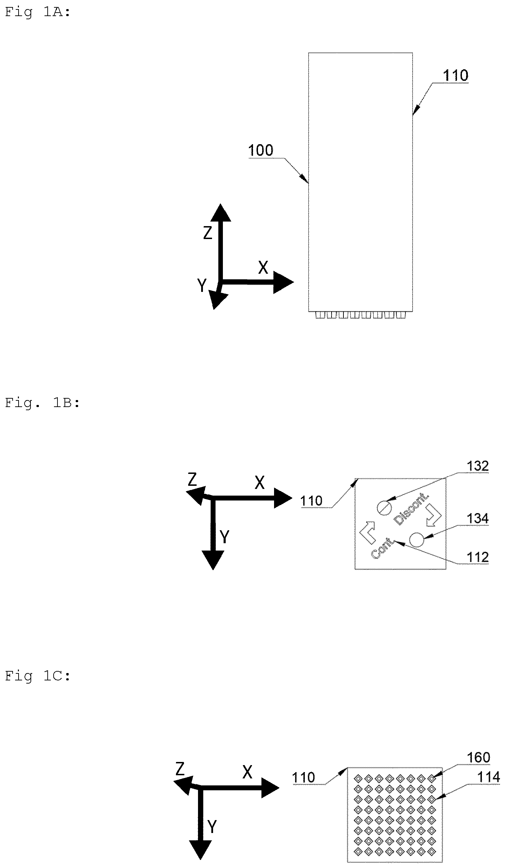

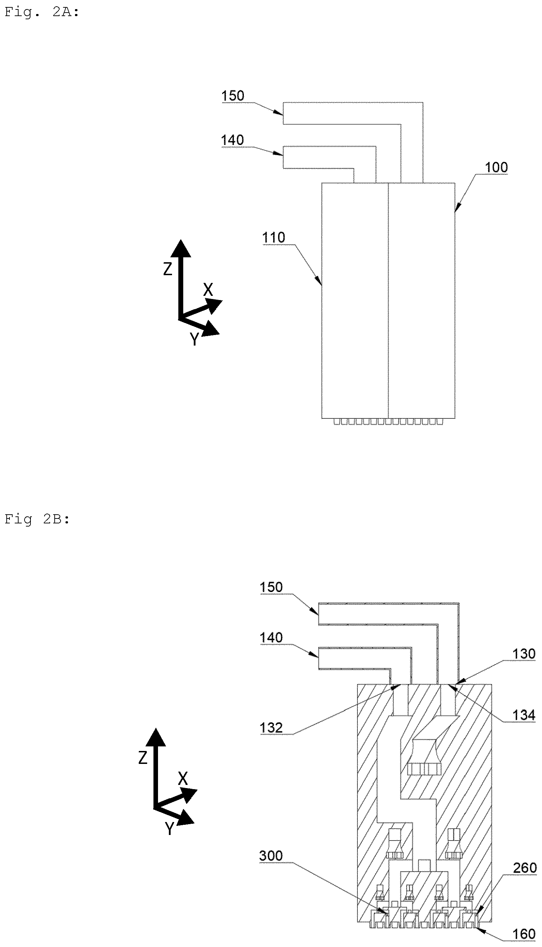

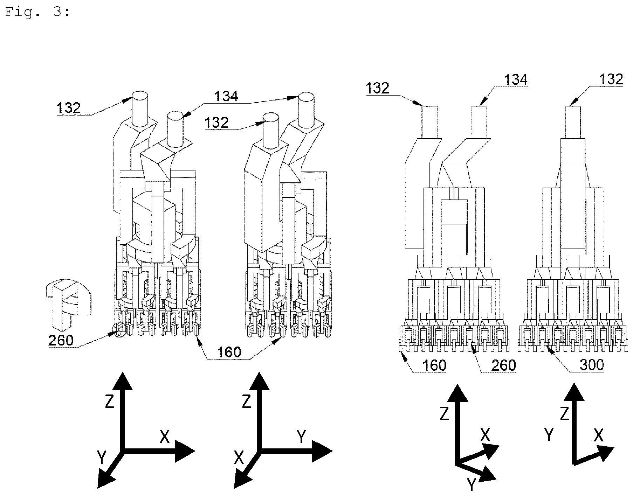

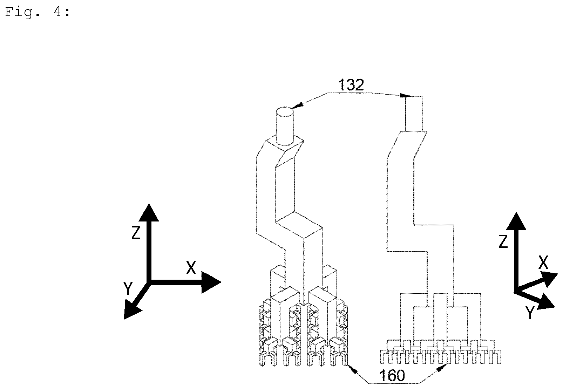

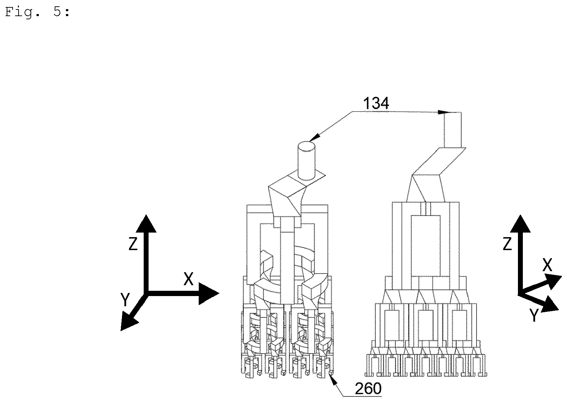

The plurality of channels 200 of the monodisperse microdroplet producing device 100 according to the present invention have a specific 3-dimensional arrangement which will be described in detail by reference to Figures 1 to 5.

In the following the specific configuration will be explained based on a preferred embodiment, wherein the device body 110 of the monodisperse microdroplet producing device 100 has the shape of a square cuboid. Both, the continuous phase inlet 132 and the discontinuous phase inlet 134, are located on a first surface 112, whereas a plurality of outlets 160 for the produced monodisperse microdroplets is located in the plane of a second surface 114.

In a similar manner to the continuous and discontinuous phase inlets 132,134 the outlets 160 are preferably configured in such a way that tubes can be connected to said outlets 160 so as to transport the produced monodisperse microdroplets outside the monodisperse microdroplet producing device 100. Any tubes common in the field of monodisperse microdroplet generation can be used.

For a better understanding of the structure of the plurality of channels 200 of the monodisperse microdroplet producing device 100, said structure will be explained based on the arrangement of the channels 200 of the continuous phase fluid and the channels of the discontinuous phase fluid starting from the continuous fluid inlet 132 and the discontinuous fluid inlet 134, respectively.

Both, the continuous phase fluid and the discontinuous phase fluid are supplied to the respective inlets 132, 134, for example by using a continuous pressure pump known in the respective field of the art.

After passing through the continuous phase inlet and discontinuous phase inlet 132,134, respectively, which are located on the first surface 112 in a xy-plane, the two fluids pass through first-generation channels, which extend towards the second surface 114 in a first direction D1 along the z-axis which is orthogonal to the first surface 112. The first-generation continuous phase channels, usually one first-generation continuous phase channel, are arranged alongside the first-generation discontinuous phase channels, usually one first generation discontinuous phase channel, in the first direction D1 towards the second surface 114 along the z-axis so as to form a first segment C1S1.

The first-generation continuous phase channels 220 then traverse at a transversal section C1S2 at an angle of 90° parallel to a xy-plane, said transversal section being located below the splitting section of the discontinuous phase channel of the first generation. Said splitting section will be explained in detail later. In the context of the present invention the term "below" refers to a shorter distance to the second surface 114 and "above" refers to a shorter distance to the first surface 112 based on the z-direction.

The continuous phase channel then turns in an angle of 90° so as to form a descending section C1S3 further along the first direction along the z-axis towards a second surface 114. Starting from section C1S3, the continuous phase channels of the first generation then follow a specific splitting pattern at the splitting section C1S4 so as to form at least two second generation continuous phase channels if one first generation continuous channel is present. Preferably three to five second generation continuous phase channels, most preferably four second generation continuous phase channels are generated.

The second-generation continuous phase channels branch from the first-generation continuous phase channel in an angle of 90° parallel to a xy-plane so as to form a transversal section C2S2 of the second-generation continuous phase channels. The angle β between each of the second generation continuous phase channels (which is determined in a plane parallel to the first surface 112), should be the same for all second-generation channels, irrespective of the exact number thereof. Thus, the angle β between each adjacent second-generation continuous flow channels S can be cal-

5

culated according to the formula:

$$\beta = 360° / S.$$

The discontinuous phase channels of the first generation start at a segment D1S1 extending mainly in the first direction D1 along the z-axis. Said segment D1S1 extends in a first splitting section D1S2 located above the splitting section of the first-generation continuous phase channels so that the splitting section of the first-generation continuous phase channels and the splitting section of the first-generation discontinuous phase channels is located on the z-axis which is substantially parallel to the first direction D1 and substantially orthogonal to the xy-plane.

A splitting of the discontinuous phase channel occurs at an offset $\Delta$ with respect to the continuous phase splitting. The offset $\Delta$ can be calculated based on the respective angle $\beta$, which is the branching angle of the first-generation continuous phase channels, using the formula $\Delta = \beta /2$. It is important that the number of branches of the discontinuous phase channels equals the number of branches of the continuous phase channels of the same generation.

The second-generation discontinuous phase channels then form a transversal section D2S1 which traverses at an angle of 90° parallel to the first surface 112 in an xy-plane extending from the center of the splitting section. Said channels then counter-turn in an angle of 90° with respect to the xy-plane so as to form a descending section D2S2 further expanding in the direction towards the second surface 114 and the outlets 160 along the z-axis. After extending in the first direction D1 along the z-axis, the discontinuous phase channels of the second generation form a 90° angle and continue to extend parallel to the first surface 112 in the xy-plane at a position located closer to the first surface 112 considering an axis extending substantially perpendicular to the first direction D1 than the splitting section of the first-generation continuous phase channels.

The channels then form a circular section D2S3 in the xy-plane extending around the descending section C1S3 of the first-generation continuous phase channels. The channels in the circular section D2S3 (in the xy-plane) are configured not to intersect with each other and thus extend unitarily in a clockwise or counterclockwise direction. Said circular section D2S3 then again counter-turns 90° along the first direction D1 into a splitting section D2S4, wherein splitting is designed in the same manner as described in the context of segment D1S2, so as to form third-generation discontinuous phase channels.

The specific arrangement of the continuous phase channel sections C1S2 to C1S4 and discontinuous phase channel sections D2S1 to D2S4 generates specific channel units CU and DU which can also be used for a suitable number of further generations of continuous/discontinuous phase channels, e.g. third, fourth, fifth and subsequent generations of the continuous phase [architecture according to C1S2 to C1S4] or second, third, fourth and subsequent generations of discontinuous phase channels [architecture according to D2S1 to D2S4]. Each additional generation of continuous and discontinuous phase channels will increase the number of generated microdroplets by the number of branches used in the splitting section.

Therefore, the number of channel generations n can be adapted based on the number of microdroplets to be generated, but said number of generations is at least 2. The specific number of microdroplet generations can be produced by minor modifications of the channel units CU and DU of the final generation.

In the following the configuration of the continuous and discontinuous phase channels of the generation forming the connection section (final generation), will be described in detail. The final generation of the continuous phase channels comprises a transversal section (in the xy-plane) in a similar way as section C1S2 and a descending section comparable to section C1S3 (along the z-axis) with the difference that the descending section of the final generation of the continuous phase channels is connected via openings to the cross section of the discontinuous phase channels of the final generation. In more detail, the descending section of the continuous phase channels of the final generation and the circular section of the discontinuous phase channels intersect substantially perpendicular at the connection section to form a microdroplet generator 300. However, it is not required that the continuous phase channels and the discontinuous phase channels intersect at an angle of 90°, but any other arrangement conventionally used in microdroplet generators can be applied.

At the intersection section of one of each of the final generation continuous phase channels with one of each of the final generation discontinuous phase channels at a respective connection section, microdroplets are generated from the continuous phase fluid and the discontinuous phase fluid. The generated microdroplets are transferred via a transport channel towards an outlet 160 located on the second surface 114 of the monodisperse microdroplet producing device.

According to the present invention the architecture of the discontinuous phase channels and the continuous phase channels can be easily interchanged by a person skilled in the art.

Compared to the microdroplet producing device disclosed in the prior art, the monodisperse microdroplet producing device 100 according to the present invention provides a number of advantages. Firstly, a monodisperse microdroplet producing device 100 according to the present invention allows an easy upscaling of the microdroplet production without requiring a linear increase of the outer dimensions, which is required with conventional 2-dimensional serialization or parallelization techniques. Furthermore, the specific arrangement of the channel structure provides an excellent volume ratio of channel volume/microdroplet producing device volume, which cannot be achieved by microdroplet generators known in the art.

With respect to the channel configuration, the continuous and discontinuous phase channels can have various shapes of cross sections. For example, the cross sections may have a shape of a circle, ellipse, oval, cross, rhombus, square, rectangle, trapezium, triangle, pentagon, hexagon, etc. Preferably the cross sections are in the shape of circle, ellipse, oval, square, rectangle or trapezium. Especially preferred are cross sections having a square or rectangular shape.

In one especially preferred embodiment, the number of branches S in each splitting section of the continuous phase channels and the discontinuous phase channels is in a range of 2 to 6, even more preferred 4. Thereby, the number K of microdroplet generators 300 obtainable by said microdroplet producing device can be calculated using the number of generations of continuous and discontinuous phase channels according to the following formula:

$$K = S^{n-1}$$

wherein K is the number of microdroplet generators 300 obtainable by said microdroplet producing device,

S is the number of branches per splitting section of each continuous/discontinuous phase channel generation, and

and n is the number of generations of continuous/discontinuous phase channels in the respective microdroplet producing device.

In an even more preferred embodiment the monodisperse microdroplet producing device 100 comprises 4 branches per splitting section so that the number of possible microdroplet channels amounts to:

In case of 2 generations of channels: $4^{2-1} = 4$

In case of 3 generations of channels: $4^{3-1} = 16$

In case of 4 generations of channels: $4^{4-1} = 64$

In case of 5 generations of channels: $4^{5-1} = 256$

In the above-mentioned preferred embodiment comprising 4 branches per splitting, the shape of the microdroplet producing device has preferably a 3-dimensional configuration of a square cuboid. Such a configuration will provide an excellent symmetrical arrangement of the outlets and an excellent ratio of channel volume/body volume of the microdroplet producing device, especially in the region of the higher channel generations.

Furthermore, the cross-sectional diameter perpendicular to the regular flow direction of the continuous or discontinuous phase fluid depends on the number of splitting sections and the liquids used. For example, it is preferred that the cross-sectional diameter perpendicular to the regular flow direction of the continuous or discontinuous phase fluid of the last generation of channels is in a range of between 0.01 mm and 10 mm, more preferred between 0.02 to 1mm.

In a preferred embodiment, the channels have a cross section of a square, wherein the cross-sectional diameter perpendicular to the regular flow direction of the continuous or discontinuous phase fluid can be calculated according to:

$$C = \frac{a\sqrt{2}}{2\,(n-1)}$$

wherein C = cross sectional diameter of the channels,

a = side length of the square shaped cross-section of the channels of the first generation of channels, and

n = number of the respective channel generation

Thus, usually the side length of the square shaped cross-section is reduced by 50% for each subsequent generation of channels.

In more detail, it is preferred that the number of branches and the diameter of the channels and, thus, the area of the cross section of the channels of the respective generation are adapted accordingly. Therefore, it is especially preferred that the sum of all cross-sectional areas of the channels of one respective generation of channels corresponds to the sum of all cross-sectional areas of the channels in the previous generation of channels. Such an effect can be obtained by a square cross section of the cannels having a diameter as outlined above based on the following formula

$$C = \frac{a\sqrt{2}}{2\,(n-1)}$$

and the number of branches per section is 4.

Such a configuration of the cross-sectional area of the respective channels in each generation provides the advantage of maintaining a constant pressure in the channel system of the continuous or discontinuous phase fluids prior to microdroplet formation. Thus, uniformity of the generated microdroplets can be improved, while shear stress within the system remains constant.

The monodisperse microdroplet producing device according to the present invention can be used for high throughput microdroplet production.

Although the shape of the outlets is not limited to any specific configuration, it was found that monodisperse microdroplet producing devices comprising tapered outlets can reduce pinning and spreading of waste or malformed droplets on the device surface.

Furthermore, the present invention relates to a method of producing a monodisperse microdroplet producing device described above.

The inventors of the present invention found that the monodisperse microdroplet producing device according to the present invention can be easily produced for example by a 3-D printing method. When using a 3-D printing method the monodisperse microdroplet producing device described above can be easily manufactured.

In more detail, in a first step a monodisperse microdroplet producing device can be designed by using a computer aided design (CAD) software (for example Autodesk Fusion 360, Autodesk (USA)) and be converted to a .STL file. Thereafter, a 3-D printer, for example a SLA 3D printer (Formlabs Form 3, Formlabs "Black V4" resin, Formlabs (USA)) using Preform (Formlabs) as a slicer and controller, is used in order to produce the monodisperse microdroplet producing device having a layer thickness of 0.025 mm.

In the Figures the following reference numerals are used:

> microdroplet producing device 100
>
> device body 110
>
> first surface 112
>
> second surface 114
>
> continuous phase inlet 132
>
> discontinuous phase inlet 134
>
> first supply channel 140
>
> first supply channel 150
>
> outlet 160
>
> channels 200
>
> microdroplet generator 300

**Claims**

1. Monodisperse microdroplet producing device (100) comprising

   - a device body (110),

- at least one continuous phase inlet (132) and at least one discontinuous phase inlet (134) present on a first surface (112);
- wherein the first surface (112) is substantially parallel to a xy-plane formed by an x-axis and y-axis;
- a plurality of channels (200) comprising at least one continuous phase channel and one discontinuous phase channel;
- wherein the channels extend in a z-direction, which is perpendicular to the xy-plane;
- wherein each continuous phase channel and each discontinuous phase channel of a generation (n) splits in at least one splitting section into a number of channels (S) per splitting section of a subsequent generation (n+1) so that the number of the continuous phase channels and of the discontinuous phase channels of each subsequent generation is increased by a factor $\geq 2$; and
- wherein each continuous phase channel and each discontinuous phase channel of each generation comprises at least one descending section in which the channels extend in the z-direction,
- at least one connection section in which at least one of the continuous phase channels intersects with at least one discontinuous phase channel to form a microdroplet generator (300), and
- wherein the continuous and discontinuous phase channels do not intersect in a prior generation to the generation of continuous and discontinuous phase channels forming the connection section,
- at least one outlet (160) for the generated microdroplets, which is present on a second surface (114),
- wherein each outlet (160) is connected to the continuous phase inlet (132) and the discontinuous phase inlet (134) via at least one continuous phase channel and one discontinuous phase channel, wherein the first surface (112) and the second surface (114) are parallel to each other in the z-direction,

> wherein the splitting section of the continuous phase channels and the splitting section of the discontinuous phase channels of the respective generation (n) have a different distance from the first surface (112) on the z-axis, but the splitting sections of the respective generation (n) of continuous phase channels and discontinuous phase channels, which are connected in the generation forming the connection section, have the same location on the x- and y-axis, and wherein in at least one plane parallel to the xy-plane parts of the descending section of the continuous phase channels of the generation (n) are surrounded by the descending sections of the generation (n+1) of the discontinuous phase channels, which are connected in the generation forming the connection section, except for the generation of continuous phase channels and discontinuous phase channels forming the connection section

2. Monodisperse microdroplet producing device (100) according to claim 1, wherein the number of generations of continuous phase channels and discontinuous phase channels is at least 3, respectively.

3. Monodisperse microdroplet producing device (100) according to claim 1, wherein the number of the continuous phase channels and the number of the discontinuous phase channels of each generation is the same.

4. Monodisperse microdroplet producing device (100) according to claims 1 or 2, wherein in each channel splitting section each continuous phase channel and each discontinuous phase channel of the generation (n) splits into 3 to 5 continuous phase channels and discontinuous phase channels of the generation (n+1).

5. Monodisperse microdroplet producing device (100) according to any one of claims 1 to 3, wherein in each channel splitting section each continuous phase channel and each discontinuous phase channel of the generation (n) splits into four continuous phase channels and four discontinuous phase channels of the generation (n+1) so that the channel ratio of the continuous phase channels and of the discontinuous phase channels of the generations n:n+1:n+2:n+3 amounts to 1:4:16:64.

6. Monodisperse microdroplet producing device (100) according to any of the preceding claims, wherein the channel section of the continuous phase channels and of the discontinuous phase channels split at each of the generations of continuous or discontinuous phase channels in an angle of 90° being parallel to the xy-plane to form a transversal section of the subsequent-generation of continuous or discontinuous phase channels.

7. Monodisperse microdroplet producing device (100) according to any of the preceding claims, wherein the angle β between each of the continuous and/or the discontinuous phase channels splitting in the splitting section, which angle is calculated in a plane parallel to the first surface, is the same for all branching channels of the same generation, irrespective of the number S thereof per splitting section and the angle β between each adjacent branching continuous/discontinuous flow channels can be calculated according to the formula: $\beta = 360 \,°/S$.

8. Monodisperse microdroplet producing device (100) according to any of the preceding claims, wherein the splitting of the discontinuous phase channels occurs at an offset Δ with respect to splitting of the continuous phase channels of the same generation and the offset Δ can be calculated based on the respective angle β, which is the branching angle of the continuous/discontinuous phase channels of the same generation, using the formula $\Delta = \beta / 2$.

9. Monodisperse microdroplet producing device (100) according to any of the preceding claims, wherein the cross-sectional diameter perpendicular to the flow direction of the continuous or discontinuous phase fluid of the generation of channels forming the connection section is in a range of from 0.01 mm to 10 mm, more preferred in a range of from 0.02 to 1 mm.

10. Monodisperse microdroplet producing device (100) according to any of the preceding claims, wherein the sum of all cross-sectional areas of the continuous and/or discontinuous phase channels of a generation (n+1) of channels corresponds to the sum of all the cross-sectional areas of the channels in the previous generation (n) of channels, respectively.

11. Monodisperse microdroplet producing device (100) according to any of the preceding claims, wherein the device body is a square cuboid and the two surfaces which have the shape of a square are defined as the upper surface and the lower surface, respectively.

12. Monodisperse microdroplet producing device (100) according to any of the preceding claims wherein the outlets (160) have a tapered shape.

13. Method for producing the monodisperse microdroplet producing device (100) according to any of the preceding claims, comprising a step of 3D-printing the monodisperse microdroplet producing device (100).

**Patentansprüche**

1. Vorrichtung (100) zur Erzeugung monodisperser Mikrotröpfchen, umfassend

   - einen Vorrichtungskörper (110),
   - mindestens einen Einlass (132) einer kontinuierlichen Phase und mindestens einen Einlass (134) einer diskontinuierlichen Phase auf einer ersten Oberfläche (112), wobei die erste Oberfläche (112) im Wesentlichen parallel zu einer xy-Ebene ist, die durch eine x-Achse und eine y-Achse gebildet wird,
- eine Vielzahl von Kanälen (200), die mindestens einen Kanal einer kontinuierlichen Phase und einen Kanal einer diskontinuierlichen Phase umfassen,

wobei die Kanäle in einer z-Richtung verlaufen, die senkrecht zu der xy-Ebene steht, wobei sich jeder Kanal einer kontinuierlichen Phase und jeder Kanal einer diskontinuierlichen Phase einer Generation (n) in mindestens einem Aufspaltungsabschnitt in eine Anzahl von Kanälen (S) pro Aufspaltungsabschnitt einer nachfolgenden Generation (n+1) so aufspaltet, dass die Anzahl der Kanäle einer kontinuierlichen Phase und der Kanäle einer diskontinuierlichen Phase jeder nachfolgenden Generation um einen Faktor ≥2 zunimmt, und wobei jeder Kanal einer kontinuierlichen Phase und jeder Kanal einer diskontinuierlichen Phase jeder Generation mindestens einen absteigenden Abschnitt umfasst, in dem die Kanäle in der z-Richtung verlaufen,

- mindestens einen Verbindungsabschnitt, in dem sich mindestens einer der Kanäle einer kontinuierlichen Phase mit mindestens einem Kanal einer diskontinuierlichen Phase kreuzt, um einen Mikrotropfengenerator (300) zu bilden, und wobei sich die Kanäle einer kontinuierlichen Phase und einer diskontinuierlichen Phase in einer früheren Generation zu der Generation der Kanäle einer kontinuierlichen Phase und einer diskontinuierlichen Phase, die den Verbindungsabschnitt bildet, nicht kreuzen,
- mindestens einen Auslass (160) für die erzeugten Mikrotröpfchen, der auf einer zweiten Oberfläche (114) vorhanden ist, wobei jeder Auslass (160) mit dem Einlass (132) einer kontinuierlichen Phase und dem Einlass (134) einer diskontinuierlichen Phase über mindestens einen Kanal einer kontinuierlichen Phase und einen Kanal einer diskontinuierlichen Phase verbunden ist, wobei die erste Oberfläche (112) und die zweite Oberfläche (114) in der z-Richtung parallel zueinander sind, wobei der Aufspaltungsabschnitt der Kanäle einer kontinuierlichen Phase und der Aufspaltungsabschnitt der Kanäle einer diskontinuierlichen Phase der jeweiligen Generation (n) einen unterschiedlichen Abstand von der ersten Oberfläche (112) auf der z-Achse aufweisen, wohingegen die Aufspaltungsabschnitte der jeweiligen Generation (n) der Kanäle einer kontinuierlichen Phase und der Kanäle einer diskontinuierlichen Phase, die in der den Verbindungsabschnitt bildenden Generation verbunden sind, jedoch die gleiche Position auf der x- und der y-Achse aufweisen, und wobei in mindestens einer Ebene, die zur xy-Ebene parallel ist, Teile des absteigenden Abschnitts der Kanäle einer kontinuierlichen Phase der Generation (n) von den absteigenden Abschnitten der Generation (n+1) der Kanäle einer einer diskontinuierlichen Phase, die in der den Verbindungsabschnitt bildenden Generation verbunden sind, umgeben sind, mit Ausnahme der Generation der Kanäle einer kontinuierlichen Phase und der Kanäle einer diskontinuierlichen Phase, die den Verbindungsabschnitt bilden.

2. Vorrichtung (100) zur Erzeugung monodisperser Mikrotröpfchen gemäß Anspruch 1, wobei die Anzahl der Generationen der Kanäle einer kontinuierlichen Phase und der Kanäle einer diskontinuierlichen Phase jeweils mindestens 3 beträgt.

3. Vorrichtung (100) zur Erzeugung monodisperser Mikrotröpfchen gemäß Anspruch 1, wobei die Anzahl der Kanäle einer kontinuierlichen Phase und die Anzahl der Kanäle einer diskontinuierlichen Phase jeder Generation gleich ist.

4. Vorrichtung (100) zur Erzeugung monodisperser Mikrotröpfchen gemäß Anspruch 1 oder Anspruch 2, wobei sich in jedem Kanalaufspaltungsabschnitt jeder Kanal einer kontinuierlichen Phase und jeder Kanal einer diskontinuierlichen Phase der Generation (n) in 3 bis 5 Kanäle einer kontinuierlichen Phase und Kanäle einer diskontinuierlichen Phase der Generation (n+1) aufspaltet.

5. Vorrichtung (100) zur Erzeugung monodisperser Mikrotröpfchen gemäß einem der Ansprüche 1 bis 3, wobei in jedem Kanalaufspaltungsabschnitt sich jeder Kanal für die kontinuierliche Phase und jeder Kanal für die diskontinuierliche Phase der Generation (n) in vier Kanäle für die kontinuierliche Phase und vier Kanäle für die diskontinuierliche Phase der Generation (n+1) aufspaltet, so dass sich das Kanalverhältnis der Kanäle einer kontinuierlichen Phase und der Kanäle einer diskontinuierliche Phasen der Generationen n:n+1 :n+2:n+3 1:4:16:64 beträgt.

6. Vorrichtung (100) zur Erzeugung monodisperser Mikrotröpfchen gemäß einem der vorhergehenden Ansprüche, wobei sich der Kanalabschnitt der Kanäle einer kontinuierlichen Phase und der Kanäle einer diskontinuierlichen Phase bei jeder der Generationen der Kanäle einer kontinuierlichen Phase oder einer diskontinuierlichen Phase in einem Winkel von 90°, der parallel zu der xy-Ebene verläuft, aufspaltet, um einen transversalen Abschnitt der nachfolgenden Generation der Kanäle einer kontinuierlichen oder einer diskontinuierlichen Phase zu bilden.

7. Vorrichtung (100) zur Erzeugung monodisperser Mikrotröpfchen gemäß einem der vorhergehenden Ansprüche, wobei der Winkel $\beta$ zwischen jedem der sich in dem Aufspaltungsabschnitt aufspaltenden Kanäle einer kontinuierlichen und/oder einer diskontinuierlichen Phase, der in einer zu der ersten Oberfläche parallelen Ebene berechnet wird, für alle sich verzweigenden Kanäle der gleichen Generation gleich ist, unabhängig von deren Anzahl S pro Aufspaltungsabschnitt, und wobei der Winkel $\beta$ zwischen den einzelnen benachbarten verzweigenden Kanälen einer kontinuierlichen/diskontinuierlichen Strömung gemäß der Formel $\beta = 360° / S$ berechnet werden kann.

8. Vorrichtung (100) zur Erzeugung monodisperser Mikrotröpfchen gemäß einem der vorhergehenden Ansprüche, wobei die Aufspaltung der Kanäle einer diskontinuierlichen Phase mit einem Versatz $\Delta$ in Bezug auf die Aufspaltung der Kanäle einer kontinuierlichen Phase der gleichen Generation erfolgt und der Versatz $\Delta$ auf Basis des jeweiligen Winkels $\beta$, der der Verzweigungswinkel der Kanäle einer kontinuierlichen/diskontinuierlichen Phase der gleichen Generation ist, unter Verwendung der Formel $\Delta = \beta / 2$ berechnet werden kann.

9. Vorrichtung (100) zur Erzeugung monodisperser Mikrotröpfchen gemäß einem der vorhergehenden Ansprüche, wobei der Querschnittsdurchmesser senkrecht zu der Strömungsrichtung des Fluids der kontinuierlichen oder der diskontinuierlichen Phase der den Verbindungsabschnitt bildenden Generation der Kanäle in einem Bereich von 0,01 mm bis 10 mm, bevorzugter in einem Bereich von 0,02 bis 1 mm, liegt.

10. Vorrichtung (100) zur Erzeugung monodisperser Mikrotröpfchen gemäß einem der vorhergehenden Ansprüche, wobei die Summe aller Querschnittsflächen der Kanäle einer kontinuierlichen und/oder diskontinuierlichen Phase einer Generation (n+1) der Kanäle jeweils der Summe aller Querschnittsflächen der Kanäle in der vorhergehenden Generation (n) der Kanäle entspricht.

11. Vorrichtung (100) zur Erzeugung monodisperser Mikrotröpfchen gemäß einem der vorhergehenden Ansprüche, wobei der Vorrichtungskörper ein rechtwinkliger Quader ist und die zwei Oberflächen, die die Form eines Quadrats aufweisen, als die obere Oberfläche bzw. die untere Oberfläche definiert sind.

12. Vorrichtung (100) zur Erzeugung monodisperser Mikrotröpfchen gemäß einem der vorhergehenden Ansprüche, wobei die Auslässe (160) eine sich verjüngende Form aufweisen.

13. Verfahren zur Herstellung der Vorrichtung zur Erzeugung monodisperser Mikrotröpfchen (100) gemäß einem der vorhergehenden Ansprüche, wobei das Verfahren eine Stufe des 3D-Druckens der Vorrichtung (100) zur Erzeugung monodisperser Mikrotröpfchen umfasst.

**Revendications**

1. Dispositif de production de microgouttelettes monodispersées (100) comprenant

    - un corps de dispositif (110),
    - au moins une entrée en phase continue (132) et au moins une entrée en phase discontinue (134) présentes sur une première surface (112) ;
    la première surface (112) étant essentiellement parallèle à un plan xy formé par un axe x et un axe y ;
    - une pluralité de canaux (200) comprenant au moins un canal en phase continue et un canal en phase discontinue; les canaux s'étendant dans une direction z, qui est perpendiculaire au plan xy ;

        chaque canal en phase continue et chaque canal en phase discontinue d'une génération (n) se divise en au moins une section de division en un nombre de canaux (S) par section de division d'une génération subséquente (n+1) de sorte que le nombre de canaux en phase continue et de canaux en phase discontinue de chaque génération subséquente est augmenté par un facteur $\geq 2$ ; et

        chaque canal en phase continue et chaque canal en phase discontinue de chaque génération comprenant au moins une section descendante dans laquelle les canaux s'étendent dans la direction z,

    - au moins une section de connexion dans laquelle au moins un des canaux en phase continue s'intersecte avec au moins un canal en phase discontinue pour former un générateur de microgouttelettes (300) et
    les canaux en phase continue et en phase discontinue ne s'intersectant pas dans une génération antérieure à la génération de canaux en phase continue et discontinue formant la section de connexion,

- au moins une sortie (160) pour les microgouttelettes produites, qui est présente sur une seconde surface (114),

chaque sortie (160) étant connectée à l'entrée en phase continue (132) et à l'entrée en phase discontinue (134) via au moins un canal en phase continue et un canal en phase discontinue,

la première surface (112) et la seconde surface (114) étant parallèles l'une à l'autre dans la direction z,

la section de division des canaux en phase continue et la section de division des canaux en phase discontinue de la génération respective (n) ayant une distance différente de la première surface (112) sur l'axe z, mais les sections de division de la génération respective (n) des canaux en phase continue et des canaux en phase discontinue, qui sont connectés dans la génération formant la section de connexion, ayant la même localisation sur les axes x et y,

et dans au moins un plan parallèle au plan xy des parties de la section descendante des canaux en phase continue de la génération (n) étant entourées par les sections descendantes de la génération (n+1) des canaux en phase discontinue, qui sont connectés dans la génération formant la section de connexion,

à part pour la génération de canaux en phase continue et de canaux en phase discontinue formant la section de connexion.

2. Dispositif de production de microgouttelettes monodispersées (100) selon la revendication 1, dans lequel le nombre de générations de canaux en phase continue et de canaux en phase discontinue est d'au moins 3, respectivement.

3. Dispositif de production de microgouttelettes monodispersées (100) selon la revendication 1, dans lequel le nombre de canaux en phase continue et le nombre de canaux en phase discontinue de chaque génération est le même.

4. Dispositif de production de microgouttelettes monodispersées (100) selon les revendications 1 ou 2, dans lequel dans chaque section de division de canal chaque canal en phase continue et chaque canal en phase discontinue de la génération (n) se divise en 3 à 5 canaux en phase continue et canaux en phase discontinue de la génération (n+1).

5. Dispositif de production de microgouttelettes monodispersées (100) selon l'une quelconque des revendications 1 à 3, dans lequel dans chaque section de division de canal chaque canal en phase continue et chaque canal en phase discontinue de la génération (n) se divise en quatre canaux en phase continue et quatre canaux en phase discontinue de la génération (n+1) de sorte que le rapport de canal des canaux en phase continue et des canaux en phase discontinue des générations n:n+1:n+2:n+3 s'élève à 1:4:16:64.

6. Dispositif de production de microgouttelettes monodispersées (100) selon l'une quelconque de revendications précédentes, dans lequel la section de canal des canaux en phase continue et des canaux en phase discontinue se divise à chacune des générations de canaux en phase continue ou discontinue en un angle de 90° étant parallèle au plan xy pour former une section transversale de la génération subséquente de canaux en phase continue ou discontinue.

7. Dispositif de production de microgouttelettes monodispersées (100) selon l'une quelconque des revendications précédentes, dans lequel l'angle $\beta$ entre chacun des canaux en phase continue et/ou discontinue se divisant dans la section de division, lequel angle étant calculé dans un plan parallèle à la première surface, est le même pour tous les canaux de branchement de la même génération, sans tenir compte de leur nombre S par section de division et l'angle $\beta$ entre chaque canaux d'écoulement continu/discontinu de branchement adjacents peut être calculé selon la formule : $\beta = 360°/S$.

8. Dispositif de production de microgouttelettes monodispersées (100) selon l'une quelconque de revendications précédentes, dans lequel la division des canaux en phase discontinue se produit à un décalage $\Delta$ par rapport à la division des canaux en phase continue de la même génération et le décalage $\Delta$ peut être calculé sur la base de l'angle $\beta$ respectif, qui est l'angle de branchement des canaux en phase continue/discontinue de la même génération, en utilisant la formule $\Delta = \beta / 2$.

9. Dispositif de production de microgouttelettes monodispersées (100) selon l'une quelconque de revendications précédentes, dans lequel le diamètre transversal perpendiculaire à la direction d'écoulement du fluide en phase continue ou discontinue de la génération de canaux formant la section de connexion se situe dans une plage de 0,01 mm à 10 mm, davantage de préférence dans une plage de 0,02 à 1 mm.

10. Dispositif de production de microgouttelettes monodispersées (100) selon l'une quelconque de revendications précédentes, dans lequel la somme de toutes les surfaces transversales des canaux en phase continue et/ou discontinue d'une génération (n+1) de canaux correspond à la somme de toutes les surfaces transversales des canaux dans la génération précédente (n) de canaux, respectivement.

11. Dispositif de production de microgouttelettes monodispersées (100) selon l'une quelconque de revendications précédentes, dans lequel le corps de dispositif est un cuboïde carré et les deux surfaces qui ont la forme d'un carré sont définies comme la surface supérieure et la surface inférieure, respectivement.

12. Dispositif de production de microgouttelettes monodispersées (100) selon l'une quelconque de revendications précédentes dans lequel les sorties (160) ont une forme conique.

13. Dispositif de production de microgouttelettes monodispersées (100) selon l'une quelconque de revendications précédentes, comprenant une étape d'impression en 3D du dispositif de production de microgouttelettes monodispersées (100).

Fig 1A:

Fig. 1B:

Fig 1C:

Fig. 2A:

Fig 2B:

Fig. 3:

Fig. 4:

Fig. 5:

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10792638 B2

- WO 02092207 A1